# EUROPÄISCHE PATENTSCHRIFT

(11) **EP 0 634 368 B1**
(45) Veröffentlichungstag und Bekanntmachung des Hinweises auf die Patenterteilung: **13.12.1995**
(21) Anmeldenummer: 93111169.4
(22) Anmeldetag: 13.07.1993
(51) Int. Cl.: C02F 3/28, C02F 3/30, C02F 3/34, C02F 3/00

(54) **Verfahren und Anlage zum direkten biologischen Behandeln von heissem Industrieabwasser oder dessen Teilströmen**
Process and device for directly biologically treating hot industrial wastewater or a partial stream thereof
Procédé et dispositif pour le traitement biologique direct des eaux usées industrielles chaudes ou un flux partiel de celles-ci

(43) Veröffentlichungstag der Anmeldung: 18.01.1995
(73) Patentinhaber: SEKOULOV, Ivan, Prof. Dr.-Ing., D-22607 Hamburg (DE)
(72) Erfinder: SEKOULOV, Ivan, Prof. Dr.-Ing., D-22607 Hamburg (DE)
(74) Vertreter: Fleck, Thomas, Dr. Dipl.-Chem.

(56) Entgegenhaltungen:
- DE-A- 1 916 060
- WATER RESEARCH. Bd. 17, Nr. 9, 1983, OXFORD GB Seite 993-995 CHIN,K.K. AND WONG,K.K. *
- DATABASE WPI Section Ch, Week 3778, Derwent Publications Ltd., London, GB;
- Class D16, AN 78-65937A &

## Beschreibung

Die vorliegende Erfindung betrifft ein Verfahren und Anlage zum direkten biologischen Behandeln von heissem Industrieabwasser oder dessen Teilströmen.

In vielen Industriebetrieben, wie etwa in Ölmühlen und in der Petrochemie und dergleichen, fallen organisch belastete Industrie- oder Prozessabwässer mit hohen Temperaturen an. Bei hohen Sulfatgehalten können diese Abwässer wegen der Bildung von hohen H₂S-Konzentrationen nicht mit den üblichen anaeroben Verfahren behandelt werden.
Sollen die organischen Substanzen durch eine aerobe biologische Behandlung entfernt werden, muss das Abwasser zunächst aufwendig gekühlt werden, so daß selbst bei Nutzung der Abwärme über Wärmetauscher Energieverluste auftreten. Auch wenn solche Abwässer mit vergleichsweise leicht flüchtigen organischen Problemstoffen belastet sind, ist die Anwendung aerober Behandlungsverfahren problematisch, da gerade bei hohen Temperaturen aufgrund der erhöhten Henry-Konstanten leicht flüchtige Komponenten beim Sauerstoffeintrag verstärkt in die Gasphase übergehen. In diesem Fall ist entweder eine Abgasbehandlung oder eine technisch aufwendige Sauerstoffversorgung, z.B. über Silikonkautschuk-Membranen erforderlich (deren Funktionstüchtigkeit bislang bei t <60° nicht geprüft ist).

Der vorliegenden Erfindung liegt deshalb die Aufgabe zugrunde, das eingangs genannte Verfahren derart zu verbessern, daß auf energiesparende Weise ein möglichst vollständiger und ungefährlicher Abbau neben den gut abbaubaren, auch leicht flüchtiger, schwer abbaubarer, organisch-chemischer und auch anorganischer Substanzen erzielt werden kann, ohne daß das heisse industrielle Abwasser vor seiner Reinigung durch Wärmetauscher etc. gekühlt werden muss. Bei diesen Temperaturen sind wegen der besseren Löslichkeit viele Substanzen besser für einen biologischen Abbau verfügbar.

Ein weiteres Ziel der Erfindung ist es, eine Anlage zu schaffen, mit der das Verfahren sich auf einfache, schnelle und energiesparende Weise durchführen lässt.

Diese Aufgabe wird durch das im Anspruch 1 gekennzeichnete Verfahren bzw. durch den Anspruch 7 gelöst.

Erfindungsgemäss bauen also thermophile Denitrifikanten unter anoxischen Bedingungen bei >60 - 80°C organisch-chemische Verbindungen, wie z.B. niedrigere Kohlenwasserstoffe, wie Hexan, aber auch Benzolringverbindungen wie Xylol oder auch Aceton unter anoxischen Bedingungen ab, wobei das Nitrat bzw. Nitrit als H-Akzeptor und O-Donator dient. Da die Ausdrücke "anaerob" und "anoxisch" in der Literatur häufig unklar definiert sind, sei erwähnt, daß vorwiegend der Ausdruck "anaerob" eine Abwasserbehandlungszone beschreibt, die praktisch frei von (NO₂⁻ + NO₃⁻)-N ist (weniger als 0,3 ppm ausgedrückt als elementarer Stickstoff) und weniger als 0,7 ppm gelöstem Sauerstoff umfasst. Ein anoxischer Zustand in einer Abwasserbehandlungszone liegt dann vor, wenn der Gehalt an gelöstem Sauerstoff weniger als 0,7 ppm beträgt und Nitrate und/oder Nitrite in anfänglichen Gesamtkonzentrationen von (NO₂⁻ + NO₃⁻)-N >0,5 mg/l als Elektronenakzeptoren (anstelle von 0₂) vorliegt.

Erfindungsgemäss bauen also thermophile Mikroorganismen unter anoxischen Bedingungen bei > 60 bis 80°C chemische Verbindungen, wie z.B. Kohlenwasserstoffe und dergleichen, zu unterschiedlichen Metaboliten ab, wobei das Nitrat bzw. Nitrit als H-Akzeptor auftritt und selbst danach vorwiegend als Stickstoffgas (N₂) entweicht. Überraschenderweise gelingt es also der erfindungsgemässen direkten, biologischen (Teilstrom-)Behandlung bei höheren Temperaturen über 60°C, einen Abbau zu erzielen, so daß die bislang notwendigen, erheblichen technischen Aufwendungen, bedingt durch die Kühlung der Abwässer vor ihrer Reinigung, entfallen können, da die thermophilen Mikroorganismen nicht nur derartigen Bedingungen standhalten, sondern diese bevorzugen (optimaler Bereich 60°C).

Häufig weisen die erfindungsgemäß eingesetzten Industrieabwässer auch ein Stickstoffdefizit auf, das durch die Verwendung von Nitrat, das gleichzeitig als Sauerstoff-Donator dient, ausgeglichen wird. Darüberhinaus gewinnt aus technisch wirtschaftlichen Gründen die Teilstrombehandlung von Prozessabwässern in der Industrie an Bedeutung. Als wichtige Vorteile zeichnen sich dabei Möglichkeiten ab, spezielle Reinigungsverfahren einzusetzen, konzentrierte heiße Ströme zu behandeln, und die relativ kleinen Reinigungseinheiten bei Änderung der Produktion mit geringem Aufwand beseitigen bzw. erweitern zu können. Für eine Abwasser-Vorreinigung kann das von großem Vorteil sein. Fallen sehr heisse Teilströme mit Temperaturen bis zu 100°C und organischen Inhaltsstoffen an, können sie beispielsweise mit dem Ablauf einer konventionellen Nitrifikationsstufe, die mit einem anderen Teilstrom gespeist wird, so vermischt werden, daß die Temperatur der Mischung auf 60°C eingestellt wird. Auf diese besonders vorteilhafte Weise können zwei Teilströme ohne Kühlung des heissen Teilstroms unter energetisch günstigen Bedingungen gemeinsam gereinigt werden.

Vorteilhafterweise werden als Mikroorganismen aerobe und fakultativ anaerobe Bakterien als Biomasse eingesetzt, wobei als thermophiler Denitrifikanten-Stamm besonders *Bazillus thermodenitrificans* (DSM Nr. 465) besonders bevorzugt wird. Sofern die Mikroorganismen jedoch erhöhten Temperaturen standhalten und diese bevorzugen, können sie ebenfalls verwendet werden, z.B. Algen, Schimmelpilze, Hefen und dergleichen, wobei Bakterien am günstigsten erscheinen. Bei Inbetriebnahme des Reaktors werden die spezialisierten Mikroorganismen in bekannter Weise eingeführt, beispielsweise kann eine Impfung mit Mikroorganismen-Suspension vorgenommen werden, oder die Mikroorganismen werden einfach dem Abwasserstrom zudosiert. Auch können Träger mit auf ihnen immobilisierten Mikroorganismen in den entsprechenden Bioreaktor eingesetzt werden. Nach der Inbetriebnahme wäre eine Nachimpfung mit spezialisierten Denitrifikanten im Normalfall nicht mehr nötig.

In vorrichtungsgemässer Hinsicht kann man also zur Lösung der Aufgabe mit einem Suspensionsreaktor mit Biomassetrennung und -rückführung oder Festbett-Bioreaktor arbeiten, dessen Merkmale im Anspruch 7 aufgeführt sind.

Im folgenden werden bevorzugte Ausführungsbeispiele anhand der Abbildungen näher erläutert.

Es zeigt:
- Abb. 3.1.: eine Schemaskizze einer Versuchsapparatur zur erfindungsgemässen thermophilen Denitrifikation mit *B. thermodenitrificans* bei 60°C;
- Abb. 3.2.: Nitratabbau, Trübung und Stickstoffproduktion während der thermophilen Denitrifikation mit *B.thermodenitrificans* bei 60°C. Organisches Substrat: Pepton-Fleischextrakt-Lösung;
- Abb. 4.2.1.: Schemaskizze einer Anlage zur thermophilen Denitrifikation mit suspendierten Mikroorganismen, die zu Batch-Versuchen und zu kontinuierlichen Versuchen eingesetzt werden kann;
- Abb. 4.2.2.: Anlage zur thermophilen Denitrifikation mit fixierten Mikroorganismen, die zu Batch-Versuchen und zu kontinuierlichen Versuchen eingesetzt werden kann.

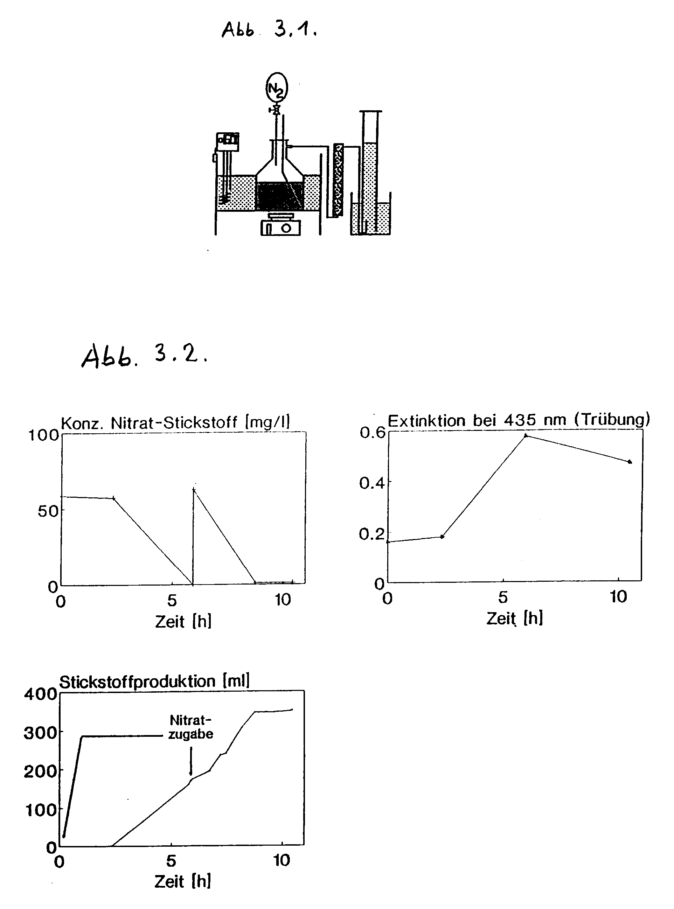

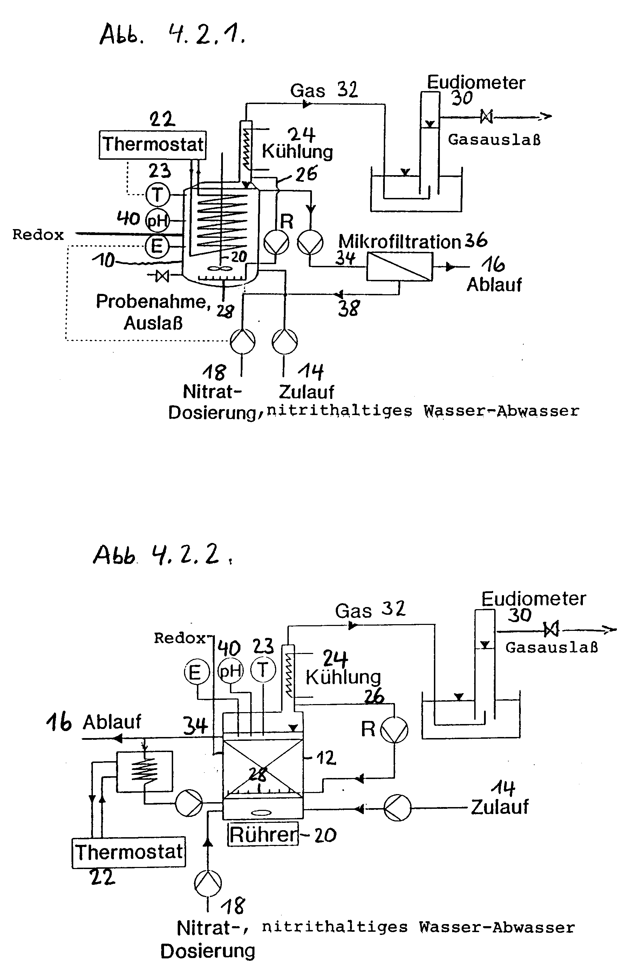

### Beispiele von

### a. Denitrifikationsversuch im Labormasstab

Versuche zur Denitrifikation mit dem Stamm *B. thermodenitrificans* (DSM Nr. 465) wurden bei 60°C durchgeführt. Als Kulturmedien diente eine wässrige Lösung von Pepton (5 g/l) und Fleischextrakt (3 g/l), die mit Nitrat als Sauerstoffdonator (ca. 50 mg NO₃⁻-N/l) versetzt wurde. Die Versuche wurden unter Sauerstoffabschluss in einer Apparatur durchgeführt, die in Abb. 3.1. dargestellt ist. Zu verschiedenen Zeitpunkten wurden Proben zur Nitratbestimmung und zur Messung der Trübung (Quantifizierung des Wachstums) über einen Schlauch, der in das Kulturmedium eintauchte, mit Hilfe einer Spritze entnommen. Der Schlauch konnte mit einem Hahn verschlossen werden, wenn keine Proben gezogen wurde. Der Druckausgleich während der Probenahme wurde über einen mit Stickstoff gefüllten Gasballon gewährleistet, der ebenfalls mit einem Hahn verschlossen werden konnte. Das durch die Denitrifikanten produzierte Gas wurde über einen Natronkalk-Filter von Kohlendioxid befreit, so daß die Stickstoffproduktion in einem Eudiometer gemessen werden konnte.

Die Ergebnisse dieser Versuche sind in Abb. 3.2. dargestellt. Das zudosierte Nitrat war innerhalb von 6 Stunden veratmet. Die Zelldichte erreicht in diesem Zeitraum ihr Maximum. Neu zudosiertes Nitrat wurde dann innerhalb von 3 Stunden völlig verbraucht. Im ersten Zyklus wurde aufgrund der geringeren Zelldichte mehr Zeit benötigt, um die gleiche Menge Nitrat zu denitrifizieren, wie im zweiten Zyklus. Wenn das Nitrat verbraucht war, konnte in den Proben auch kein Nitrit mehr nachgewiesen werden. Die entstandene Stickstoffmenge entsprach der denitrifizierten Nitratmenge.

Weitere Denitrifikationsversuche in der in Abb. 3.1. dargestellten Apparatur zeigten, daß eine Denitrifikation auch dann stattfindet, wenn 90 % der Pepton-Fleischextrakt-Lösung gegen eine Suspension von kommunalem Belebtschlamm in Sörensen-Puffer ausgetauscht werden.

### b. Versuchsanlagen

Die Batch-Versuche, die die Eignung der verschiedenen organischen Substanzen als H-Donatoren geben, können im Labormasstab in gasdichten Gefässen durchgeführt werden, die ähnlich konstruiert sein werden, wie der in Abb. 3.1. dargestellte Versuchsaufbau. Folgende Parameter können dabei in Abhängigkeit von der Versuchszeit gemessen werden: Nitrat, Nitrit, Stickstoffproduktion, Substratkonzentration, TOC (gesamte organisch gebundene Kohlenstoffe), pH.

Die Nitrat-Dosierung kann in den Versuchsansätzen über Redox-Elektroden gesteuert werden. Ist das Nitrat verbraucht, tritt ein Sprung im Redox-Potential auf, der als Steuerimpuls für die Zugabe einer bestimmten Menge Nitratlösung dient. Der pH-Wert kann on-line gemessen werden.

Als leichtflüchtige Substrate eignen sich beispielsweise die folgenden Vertreter verschiedener Substanzklassen, die von den erfindungsgemäss eingesetzten Bakterien gut abgebaut werden: Hexan, Xylol, Aceton, Dichlormethan. Sie können mit einem vorhandenen Gaschromatographen mit Headspace-Probengeber problemlos analysiert werden (Hexan, Xylol und Aceton mit FID, Dichlormethan mit ECD). Nicht nur die wässrigen Proben, sondern auch der Gasraum der Versuchsanlagen kann dabei auf diese Stoffe analysiert werden. Dazu wird das entstandene Gas über Aktivkohleröhrchen geleitet, die anschliessend mit noch zu ermittelnden Lösungsmitteln eluiert und ebenfalls mittels der Headspace-Technik im Gaschromatographen vermessen werden. TOC-Analysen der wässrigen Phase geben dann Aufschluss darüber, daß ein weit überwiegender Anteil der Substrate in Metaboliten umgewandelt wird.

Auch nichtflüchtige Substrate, wie Stärke und Triglyceride werden abgebaut, wobei Stärke als Jod-Kaliumjodid-Komplex photometrisch und Triglyceride enzymatisch bestimmt werden können.

Grundsätzlich können zwei verschiedene Reaktortypen (10,12) mit suspendierter oder fixierter Biomasse, die in Abb. 4.2.1. und 4.2.2. schematisch dargestellt sind, eingesetzt werden, die sowohl für Batch-Versuche als auch für kontinuierliche Versuche geeignet sind. Beide Reaktoren sind thermostatisiert (>60°C) und mit einem Kühler 24 zur Trocknung des entstehenden Gases ausgerüstet. Die Biomasse im Suspensionsreaktor (10) (Rührkessel) wird durch eine Mikrofiltrationseinheit oder ähnliches 36 vom Ablauf abgetrennt (Abb. 4.2.1.) und im Reaktor zurückgeführt. Ein Teil davon wird als Überschußschlamm aus dem System entfernt.

Die Apparatur, die in Abb. 4.2.2. dargestellt ist, eignet sich für immobilisierte thermophile Denitrifikanten. Es handelt sich um einen Biofilmreaktor (Fließbett oder Festbetttyp) 12, in dem verschiedene Aufwuchskörper eingesetzt werden können. Zur besseren Vermischung im Biofilmreaktor kann bei der Denitrifikation entstandenes Gas mit Hilfe eines Verdichters über Düsen 28 in den Biofilmreaktor 12 eingeleitet werden.

Zur Denitrifikation mit Belebtschlamm als H-Donator (anoxische Schlammstabilisation) mit thermophilen Denitrifikanten sind die Verfahrensanlagen, die in Abb. 4.2.1. und 4.2.2. dargestellt sind, besonders geeignet. Kontrollparameter können Nitrat, Feststoffgehalt, TOC, pH, Redoxpotential, produzierte Stickstoffmenge u.ä. sein.

In praktischer Hinsicht können die in Abb. 4.2.1. und 4.2.2. gezeigten Versuchsanlagen bei einer Ölmühle vor Ort installiert werden, wo sehr warme Abwasserteilströme mit 60° bis 80°C anfallen. Die Anlagen können kontinuierlich arbeiten. Als Parameter zur Beurteilung des Abbaus organischer Inhaltsstoffe des Ölmühlenabwassers werden die TOC-Werte im Zu- und im Ablauf der Versuchsanlage analysiert.

## Patentansprüche

1. Verfahren zum direkten biologischen Behandeln von heissem Industrieabwasser oder dessen Teilströmen, gut abbaubare, leicht flüchtige und/oder hochmolekulare, organisch-chemische und/oder anorganische Verbindungen enthaltend, dadurch gekennzeichnet, daß die chemischen Verbindungen unter anoxischen Bedingungen und Einsatz thermophiler Denitrifikanten in Form von Mikroorganismen in einem Kulturmedium ( Biomasse ) zwischen > 60° bis 80°C abgebaut werden, wobei Nitrat bzw. Nitrit als H-Akzeptor extern zudosiert wird oder der Ablauf einer konventionellen Nitrifikationsanlage einer weiteren Reinigungsstufe benutzt wird.

2. Verfahren nach Anspruch 1, dadurch gekennzeichnet, daß als Mikroorganismen aerobe oder fakultativ anaerobe Bakterien als Biomasse eingesetzt werden, die ihre optimale t >60° haben.

3. Verfahren nach Anspruch 2, dadurch gekennzeichnet, daß als thermophiler Denitrifikanten-Stamm *Bazillus thermodenitrificans* (DSM Nr. 465, Deutsche Sammlung von Mikroorganismen GmbH, Meschroder Weg 1B, 38124 Braunschweig) eingesetzt wird.

4. Verfahren nach Anspruch 1 bis 3, dadurch gekennzeichnet, daß Klär-, Belebt- und oder Überschußschlamm als Kulturmedium und H-Donator zur Durchführung der Denitrifikation unter Steigerung der Schlammhydrolysegeschwindigkeit bei erhöhter Temperatur (t° >60°C) im gleichen Denitrifikationsreaktor eingesetzt wird.

5. Verfahren nach einem oder mehreren der vorstehenden Ansprüche 1 bis 4, dadurch gekennzeichnet, daß ein Teilstrom von heissem Industrieabwasser mit einer Temperatur von etwa 90 - 110°C durch Zugabe und Vermischen mit einem Teilstrom von Nitrat und/oder dem Ablauf der Nitrifikationsstufe auf ca. 60°C und darüber abgekühlt wird.

6. Verfahren nach einem der Ansprüche 1 bis 4, dadurch gekennzeichnet, daß es kontinuierlich oder als Batchverfahren geführt wird, wobei die Biomasse in suspendierter Form oder als Biofilm (Festbett oder Fließbett-Typ) im geschlossenen Reaktor vorliegt.

7. Anlage zur Durchführung des Verfahrens nach Anspruch 1, gekennzeichnet durch folgende Merkmale:
einen Suspensions- oder Biofilmreaktor (10 bzw. 12) umfassend
einen Zu- und Ablauf (14 bzw. 16) für das Industrieabwasser und ggf. Klärschlamm und dergleichen, sowie einen Zulauf (18) für die Nitratdosierung,
eine Isolation
ein Rührwerk (20),
einen Thermostaten (22) mit Temperaturmess- und anzeige (23)
eine Kühlvorrichtung (24) für das erzeugte und austretende Gas,
eine Rückführungsleitung (26) für das ausgetretene Gas, die mit dem Bioreaktor (10,12) unter Einspeisung über Düsen (28) verbunden ist,
eine von der Kühlvorrichtung (24) zu einem Gasauffangbehälter (30) führende Leitung (32)
und wobei im Suspensions-Bioreaktor (10) in der Ablaufleitung (34) eine Mikrofiltrationsvorrichtung (36), die über eine Leitung 38) mit dem Zulauf (18) für die Nitratdosierung verbunden ist, vorgesehen ist.

8. Anlage nach Anspruch 7, dadurch gekennzeichnet, daß eine Redox- und/oder pH-Wert-Mess- und Anzeigevorrichtung (40) im bzw. am Bioreaktor (10,12) vorgesehen ist.

9. Anlage nach Anspruch 7, dadurch gekennzeichnet, daß Vorrichtungen zum Feststellen des Sauerstoffbedarfs (CSB, BSB) des Abwassers im Zulauf (14) und/oder der TOC-Werte im Zu- und Ablauf (14,16) vorgesehen werden.

## Claims

1. Process for the direct biological treatment of hot industrial waste water or its partial flows containing readily degradable, highly volatile and/or high molecular weight, organic-chemical and/or inorganic compounds, characterized in that the chemical compounds are degraded under anoxic conditions and using thermophilic denitrifying bacteria in the form of microorganisms in a culture medium (biomass) between > 60° and 80°C, nitrate or nitrite being externally dosed in as the H-acceptor or use is made of the outlet of a conventional nitrification plant of a further purification stage.

2. Process according to claim 1, characterized in that as microorganisms use is made of aerobic or optionally anaerobic bacteria as biomass having their optimum t >60°.

3. Process according to claim 2, characterized in that the thermophilic denitrifying bacterial strain used is Bacillus thermodenitrificans (DSM No. 465, Deutsche Sammlung von Mikroorganismen GmbH, Meschroder Weg 1B, 38124 Braunschweig).

4. Process according to claims 1 to 3, characterized in that sewage, activated and/or excess sludge is used as the culture medium and H-donor for performing the denitrification, whilst raising the sludge hydrolysis speed at elevated temperature (t° >60°C) in the same denitrification reactor.

5. Process according to one or more of the claims 1 to 4, characterized in that a partial flow of hot industrial waste water at a temperature of approximately 90 to 110° is cooled to approximately 60°C and higher by adding and mixing with a partial flow of nitrate and/or the outflow from the nitrification stage.

6. Process according to one of the claims 1 to 4, characterized in that it is performed continuously or as a batch process, the biomass being in suspended form or as a biofilm (fixed or fluid bed type) in the closed reactor.

7. Installation for performing the process according to claim 1, characterized by the following features:
a suspension or biofilm reactor (10 or 12) comprising
an inlet and outlet (14, 16) for the industrial waste water and optionally sewage sludge and the like, as well as an inlet (18) for nitrate dosing,
an insulation,
a stirrer (20),
a thermostat (22) with temperature measurement and indication (23),
a cooling device (24) for the produced, escaping gas,
a return line (26) for the discharged gas, which is connected to the bioreactor (10, 12), accompanied by feeding in via nozzles (28),
a line (32) leading from the cooling device (24) to a gas collecting container (30),
and in which in the suspension bioreactor (10) in the discharge line (34) is provided a microfiltration device (36), which is connected by means of a line (38) to the inlet (18) for nitrate dosing.

8. Installation according to claim 7, characterized in that there is a redox and/or pH-value measurement and indicating device (40) in or on the bioreactor (10, 12).

9. Installation according to claim 7, characterized in that there are devices for establishing the oxygen need (CSB, BSB) of the waste water in the inlet (14) and/or the TOC values in the inlet and outlet (14, 16).

## Revendications

1. Procédé pour le traitement biologique direct d'eaux industrielles usées chaudes ou de leurs courants partiels, contenant des composés organiques chimiques et/ou anorganiques, bien dégradables, légèrement volatils et/ou à haute densité moléculaire, caractérisé en ce que les composés chimiques sont dégradés dans des conditions anoxiques et en utilisant des bactéries dénitrificantes thermophiles sous forme de microorganismes dans un milieu de culture (biomasse) entre > 60° et 80° C, du nitrate ou du nitrite étant ajouté de manière externe comme accepteur d'hydrogène ou le processus d'une installation de nitrification conventionnelle d'un autre étage d'épuration étant utilisé.

2. Procédé selon la revendication 1, caractérisé en ce que des bactéries aérobes ou, facultativement, des bactéries anaérobes étant utilisées comme microorganismes en tant que biomasse qui ont leur t optimale > 60°.

3. Procédé selon la revendication 2, caractérisé en ce que, comme souche de bactéries dénitrificantes thermophiles on utilise le *bazillus thermodenitrificans* (DSM N° 465, Deutsche Sammlung von Mikroorganismen GmbH, Meschroder Weg 1B, 38124 Braunschweig).

4. Procédé selon la revendication 1 à 3, caractérisé en ce que l'on utilise des boues de curage, de la boue activée ou de la boue en excès comme milieu de culture et donneur d'hydrogène pour effectuer la dénitrification en augmentant la vitesse d'hydrolyse de la boue à une température élevée (t° > 60° C) dans le même réacteur de dénitrification.

5. Procédé selon l'une ou plusieurs des revendications précédentes 1 à 4, caractérisé en ce qu'un courant partiel d'eaux industrielles usées chaudes à une température d'environ 90 à 110° C est refroidi à environ 60° C et plus en étant ajouté et mélangé à un courant partiel de nitrate et/ou l'écoulement de l'étage de nitrification.

6. Procédé selon l'une des revendications 1 à 4, caractérisé en ce qu'il est effectué continuellement ou comme procédé discontinu, la biomasse existant en suspension ou comme biofilm (lit fixe ou type à lit fluidifié) dans le réacteur fermé.

7. Installation pour exécuter le procédé selon la revendication 1, caractérisée par les caractéristiques suivantes : un réacteur à suspension ou à biofilm (10 ou 12) comprenant
- une arrivée et une évacuation (14 ou 16) pour les eaux industrielles usées et, le cas échéant, les boues de curage et équivalent, ainsi qu'une arrivée (18) pour le dosage du nitrate,
- une isolation,
- un agitateur (20),
- un thermostat (22) avec dispositif de mesure et d'indication de la température (23),
- un dispositif de refroidissement (24) pour le gaz produit et qui s'échappe,
- une conduite de retour (26) pour le gaz qui s'échappe, qui est reliée au bioréacteur (10, 12) en étant alimenté par des tuyères (28),
- une conduite (32) qui mène du dispositif de refroidissement (24) à un collecteur de gaz (30),
un dispositif de microfiltration (36), qui est relié à l'arrivée (18) pour le dosage du nitrate par une conduite (38), étant prévu dans le bioréacteur à suspension (10) dans la conduite d'évacuation (34).

8. Installation selon la revendication 7, caractérisée en ce qu'un dispositif de mesure et d'indication de redox et/ou de valeur pH (40) est prévu dans ou sur le bioréacteur (10, 12).

9. Installation selon la revendication 7, caractérisée en ce que des dispositifs pour constater les besoins en oxygène (CSB, BSB) des eaux usées sont prévus dans l'arrivée (14) et/ou des valeurs de la teneur totale en carbone organique dans l'arrivée et l'évacuation (14, 16).
